# EUROPÄISCHE PATENTSCHRIFT

(11) **EP 1 900 871 B1**
(45) Veröffentlichungstag und Bekanntmachung des Hinweises auf die Patenterteilung: **31.07.2013**
(21) Anmeldenummer: 07115668.1
(22) Anmeldetag: 04.09.2007
(51) Int. Cl.: D21C 9/08

(54) **Verfahren zur Kleberreduktion bei der Papierherstellung**
Method for reducing adhesive in paper manufacture
Procédé destiné à la réduction de colle lors de la fabrication du papier

(30) Priorität: 09.09.2006 DE 102006042429
(43) Veröffentlichungstag der Anmeldung: 19.03.2008
(73) Patentinhaber: Messer Austria GmbH, 2352 Gumpoldskirchen (AT); Messer Polska Sp. z.o.o., 41-503 Chorzow (PL)
(72) Erfinder: Gutenberger, Helmut, 4652, Fischlhalm (AT); Pastuszczyn, Wojciech, 41-808, Zabrze (PL)
(74) Vertreter: Münzel, Joachim R.

(56) Entgegenhaltungen:
- WO-A-99/24661
- DE-A1- 3 345 287
- DE-A1- 4 443 229
- DE-A1- 19 515 273
- FR-A- 2 762 624
- US-A- 1 640 612

## Beschreibung

Die Erfindung betrifft ein Verfahren zum Entfernen von Kleberresten bei der Wiederverwertung von Altpapier, bei dem das Altpapier zu einer wässerigen Suspension aufgeschlossen und die Suspension einer mechanischen oder chemischen Trennbehandlung zum Abtrennen grobkörniger Kleberreste von der Suspension unterzogen wird.

Die Aufbereitung von Altpapier zum Zwecke der Wiederverwertung zur Papierherstellung ist bereits in der US 1 640 612 B1 beschrieben worden. In dieser Druckschrift wird die Behandlung einer aus bedrucktem Altpapier gewonnenen Pulpe einer Behandlung mit einer Na₃PO₄- Lösung beschrieben. Um Verunreinigungen wie Farbreste und dergleichen zu entfernen wird de Pulpe einer Waschung mit kaltem Wasser unterzogen.

Durch den verstärkten Eintrag von gemischtem Altpapier als Rohstoffquelle bei der Papierherstellung werden große Mengen an festen oder wasserlöslichen, klebenden Bestandteilen in die Papiermaschinenkreisläufe mit eingetragen. Sie stellen eine wesentliche Ursache für so genannte "Stickies" dar, hydrophobe Agglomerate, die sich in Sieben und Filzen von Papiermaschinen anlagern und zu Papierbahnabrissen führen können.

Unter "Stickies" werden im Folgenden klebrige Ablagerungen in Form organischer Komplexe verstanden, die sich durch Agglomeration von miteinander wechselwirkenden Störstoffen aus dem Altpapier bilden. Alle klebrigen Ablagerungen, die ausschließlich über die Rohstoffe eingeführt werden, bezeichnet man als "primäre Stickies". Klebrige Verunreinigungen, die erst durch eine Reaktion mit Additiven hervorgerufen werden, werden als "sekundäre Stickies" bezeichnet. Als Hauptquelle für Stickies gelten die Klebstoffe aus der Papierverarbeitung, aber auch synthetische Bindemittel aus der Papierveredelung. Üblicherweise wird grob zwischen "Makrostickies" mit einer Teilchengröße von mehr als 500 µm und Mikrostickies mit einer Teilchengröße zwischen 10 µm und 500 µm unterschieden.

Makrostickies können durch geeignete chemische oder mechanische Trennverfahren wie Flotation, Ausfällung, Sieben oder Bindung an kationische Fixiermittel aus dem Stoffkreislauf entfernt werden. Damit verbunden ist jedoch die Notwendigkeit eines umfangreichen Einsatzes von Chemikalien und/oder einer regelmäßig zu vollziehenden Reinigung der eingesetzten Trennmittel, wodurch jedoch jeweils der Produktionsprozess empfindlich gestört wird oder sogar unterbrochen werden muss. Ein Überblick über verschiedene Behandlungsweisen sowie ihre Vor- und Nachteile findet sich beispielsweise in der WO 01/53601 A1.

Während Makrostickies durch die genannten chemischen oder mechanischen Trennverfahren beseitigt werden können, bleiben Mikrostickies üblicherweise in der Suspension erhalten. Da die Mikrostickies unterhalb der Sichtbarkeitsgrenze liegen, wurde dies bislang auch nicht als ein Problem betrachtet. Man beschränkte daher die Bekämpfung der Mikrostickies darauf, ihre Agglomeration zu Makrostickies zu unterbinden, wie beispielsweise in der bereits genannten WO 01/53601 A1 beschrieben.

Mikrostickies führen jedoch zu einer Verschlechterung der Papierqualität und erhöhen den Wasserverbrauch der Papiermühle. Zudem wurde festgestellt, dass auch Mikrostickies auf Dauer zu klebrigen Ablagerungen in der Papiermaschine führen können. Mit steigenden Anforderungen an die Qualität von Recyclingpapier und der Forderung, den Wasserverbrauch von Papiermühlen zu reduzieren und die Auslastung der Papiermaschine zu erhöhen, erscheint es daher erforderlich zu sein, auch die Mikrostickes zuverlässig aus dem Kreislauf zu entfernen. Ein zuverlässiges Verfahren zur Entfernung von Mikrostickies ist bislang nicht bekannt.

Aufgabe der vorliegenden Erfindung ist somit, ein Verfahren anzugeben, mit dem die Entfernung von Kleberresten, insbesondere Mikro- und Makrostickies, aus der Altpapiersuspension verbessert werden kann.

Diese Aufgabe wird bei einem Verfahren der eingangs genannten Art dadurch gelöst, dass vor der Trennbehandlung ein kryogenes Kältemittel in die Suspension eingetragen wird, wodurch eine schockartige Abkühlung an der Eintragsstelle des kryogenen Kältemittels erfolgt.

Beim erfindungsgemäße Verfahren der Zugabe eines kryogenen Kältemittels in die Suspension erfolgt an der Eintragstelle des kryogenen Kältemittels eine schockartige Abkühlung, durch die einerseits die Wirksamkeit der Klebstoffe herabgesenkt wird und andererseits die Klebstoffe von den Fasern gelöst werden.

Die Reduktion der Klebefähigkeit trifft Makrostickies und Mikrostickies gleichermaßen. Es kommt somit nicht mehr oder nur noch in stark verringertem Umfang zum Anhaften der Kleberteilchen an den eingesetzten mechanischen Einrichtungen, wie beispielsweise der Papiermaschine oder Trenneinrichtungen wie Siebe u. dergl., und der damit verbundenen Ausbildung klebriger Anlagerungen. Insgesamt erhöht sich dadurch die Produktivität der Papiermaschine und die Qualität des erzeugten Papiers erheblich.

Als kryogenes Kältemittels kann jedes Kältemittel eingesetzt werden, das beim Eintragen zu einer schockartigen Kälteeinwirkung auf die Kleberreste führt, wie beispielsweise flüssiger Stickstoff oder Wasserstoff. Bevorzugt handelt es sich bei dem kryogenen Kältemittel jedoch um Kohlendioxid, das im festen, flüssigen oder kalten gasförmigen Zustand in die Suspension eingetragen wird. Besonders bevorzugt wird das Kohlendioxid dabei im flüssigen Zustand herangeführt und vor oder während der Zuführung zur Suspension unter Abkühlung entspannt. Der Einsatz von Kohlendioxid für verschiedene Einsatzgebiete der Papierherstellung ist ausführlich in der EP 1 029 124 A1 beschrieben. So wird Kohlendioxid beispielsweise dazu eingesetzt, das Waschen der Pulpe zu verbessern, den pH-Wert einer Zellstoffsuspension einzustellen oder die Entwässerung der Zellstoffsuspension zu unterstützen. Das Kohlendioxid wird dabei üblicherweise im warmen gasförmigen Zustand in die Zellstoffsuspension eingetragen; ein Temperatureffekt ist mit dem Eintrag nach dem Stande der Technik nicht verbunden und auch nicht bezweckt.

Eine vorteilhafte Weiterbildung der Erfindung sieht vor, dass der Suspension vor dem Verfahrensschritt der Zugabe eines Kältemittels ein Mittel zum Agglomerieren von Mikrostickies zugegeben wird. Die Mikrostickies agglomerieren zu Makrostickies mit einer Teilchengröße von über 500 µm, die anschließend durch konventionelle Trennverfahren leicht aus der Suspension entfernt werden können. Auf diese Weise gewinnt man eine Suspension hoher Reinheit, die auch höheren Ansprüchen an die Papierqualität genügt und die nicht zu klebrigen Ablagerungen an der Papiermaschine oder den mechanischen Trenneinrichtungen führt.

Ein bevorzugtes Verfahren zum Agglomerieren von Mikrostickies besteht darin, in die Suspension eine Quelle für Ca²⁺ - Ionen zuzugeben. Es hat sich gezeigt, dass Ca²⁺ - Ionen in der Lage sind, Mikrostickies zu größeren Clustern zusammenzufügen, die anschließend durch chemische oder mechanische Trennverfahren aus der Suspension entfernt werden können. Bei der Quelle für Ca²⁺ - Ionen kann es sich um jede chemische Verbindung handeln, bei der sich Ca²⁺ - Ionen abspalten lassen, beispielsweise handelt es sich um PCC (gefälltes Kalziumkarbonat) oder GCC (gemahlenes Kalziumkarbonat). GCC und PCC sind insbesondere deshalb bevorzugt, da sie meist ohnehin in den Paperfabriken vorhanden sind, da sie auch als Füllstoffe zum Einsatz kommen. PCC besitzt zudem die Eigenschaft, Stickies an sich zu binden, und ermöglicht daher eine besonders gründliche Beseitigung der von Mikrostickies aus der Suspension.

In einer abermals bevorzugten Ausgestaltung der Erfindung wird die Suspension zur Entfernung der Kleberreste im Kreislauf geführt. Dabei erfolgt nach der ersten Trennstufe zur Entfernung von grobkörnigen Kleberesten die Zugabe der Quelle für Ca²⁺ - Ionen. Dabei bilden sich aus den agglomerierten Mikrostickies Makrostickes aus. Die Suspension wird anschließend wieder der Trennstufe zur Entfernung grobkörniger Kleberreste zugeführt, wobei die aus den Mikrosticky - Agglomeraten gebildeten Makrostickes aus der Suspension entfernt werden. Um die Klebefähigkeit beider Arten Stickies zu reduzieren, ist vor der Trennstufe zur Entfernung grobkörniger Kleberreste die Einspeisung eines kryogenen Kältemittels vorgesehen. Die Kreislaufführung wird so lange fortgeführt, bis ein vorgegebener Grenzwert für die Mikrosticky - Konzentration unterschritten ist.

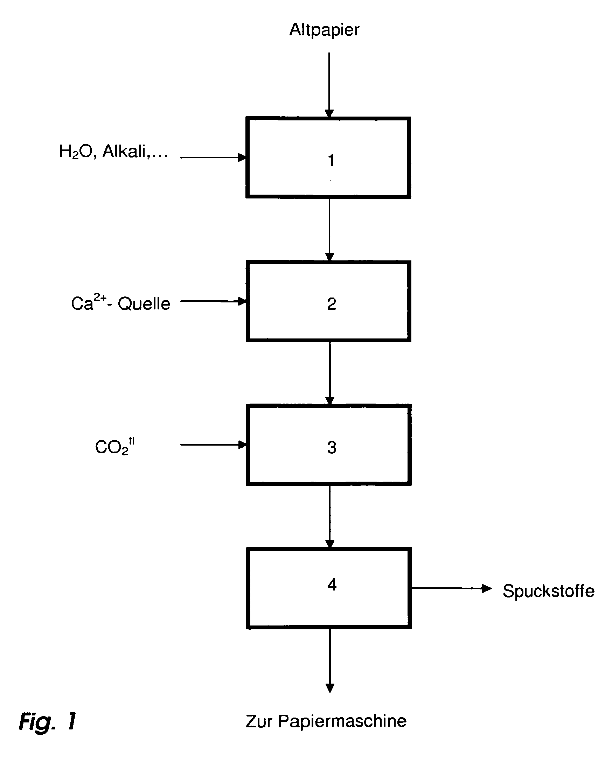

Anhand der Zeichnung soll ein Ausführungsbeispiel der Erfindung näher erläutert werden. In der Zeichnung (Fig. 1) ist schematisch ein Verfahrensablauf zur Aufbereitung von Altpapier für die Papierherstellung gezeigt.

Altpapier wird mit Wasser und diversen chemischen, insbesondere alkalischen Zusatzstoffen zu einer wässerigen Suspension aufgeschwemmt (1), die mittels einer Fördereinrichtung zur Papiermaschine transportiert wird. In der Suspension sind neben Fasern auch Füllstoffe, Fremdkörper, wie beispielsweise Büroklammern o.ä. und grobkörnige Bestandteile, darunter auch Makrostickies enthalten. Derartige Bestandteile sind durch übliche chemische oder mechanische Trennverfahren leicht aus der Suspension zu entfernen.

In der Suspension verbleiben neben den Papierfasern noch kleinteilige Kleberreste, sogenannte Mikrostickies, die die Qualität des Ausgangsprodukts nachhaltig beeinträchtigen und zu klebrigen Ablagerungen an der Papiermaschine oder an mechanischen Trenneinrichtungen führen können. Um diese Mikrostickies zu entfernen, wird der Suspension eine Quelle von Ca²⁺ - Ionen zugeführt (2), beispielsweise in Form von gefälltem Kalziumkarbonat (PCC). Die Ca²⁺ - Ionen führen die Mikrostickies zu größeren Aggregaten zusammen, bis sie die Größe von Makrostickies erreichen. Anschließend wird ein kryogenes Kältemittel, im Ausführungsbeispiel Kohlendioxid, zur Suspension zugegeben (3). Dazu ist eine Zuführeinrichtung für Kohlendioxid vorgesehen, die eine oder mehrere in die Suspension hineinragende Entspannungsdüse/n umfasst, die an eine Quelle für flüssiges Kohlendioxid in die Suspension angeschlossen sind. Das unter Druck herangeführte Kohlendioxid entspannt beim Eintritt in die Suspension unter starker Abkühlung. Durch die schockartige Abkühlung wir die Klebefähigkeit der in der Suspension enthaltenen Kleberreste reduziert und zudem die noch an Fasern anhaftenden Kleberreste vom Faserverbund größtenteils abgetrennt. Über die Variation von Druck und/oder Temperatur des zugeführten Kohlendioxids kann die Temperatur des entspannten Kohlendioxids in einem weiten Bereich vorgegeben werden. Auf diese Weise kann die für die jeweilige Suspension optimale Eintrittstemperatur des Kohlendioxids empirisch ermittelt und entsprechend für die Dauer der Behandlung eingestellt werden.

Die Zuführeinrichtung für das Kohlendioxid ist mit einer Fördereinrichtung für die Suspension gekoppelt, wodurch die Menge des zugeführten Kohlendioxids an die Menge der geförderten Suspension angepasst werden kann. Üblicherweise erfolgt, je nach Qualität des zur Herstellung der Suspension verwendeten Rohstoffs, eine Zugabe von 0,5 bis 8 kg Kohlendioxid pro Tonne Suspension. Dadurch wird erreicht, dass die Temperatur der Pulpe insgesamt während der Behandlung auf einem Wert von etwa 40°C bis 60°C verbleibt. Die Makrostickies werden anschließend mittels bekannter mechanischer oder chemischer Trennverfahren zusammen mit sonstigen Fremdkörpern und grobkörnigen Bestandteilen, wie beispielsweise Büroklammern, Kunststoffreste o.ä. als so genannte Spuckstoffe aus der Suspension entfernt (4). Als Trennverfahren kommen beispielsweise Sieben, Zentrifugieren, Flotieren, Ausfällen oder andere bekannte Verfahren zum Einsatz.

Die verbleibende Suspension ist weitgehend frei von Kleberresten wie Mikro- oder Makrostickies. Dadurch werden klebrige Anlagerungen an der Papiermaschine oder an mechanischen Trenneinrichtungen, die zu einer Minderung der Produktivität des Herstellungsprozesses führen, deutlich reduziert und zudem die Papierqualität erhöht.

### Bezugszeichenliste

1. Verfahrensschritt: Auflösung des Altpapiers
2. Verfahrensschritt: Zugabe einer Ca2+ - Quelle
3. Verfahrensschritt: Zugabe von flüssigem Kohlendioxid
4. Verfahrensschritt: Trennung der grobkörnigen Bestandteile

## Patentansprüche

1. Verfahren zum Entfernen von Kleberresten bei der Wiederverwertung von Altpapier, bei dem das Altpapier zu einer wässerigen Suspension aufgeschlossen und die Suspension einer mechanischen oder chemischen Trennbehandlung (4) zum Abtrennen grobkörniger Kleberreste von der Suspension unterzogen wird,
**dadurch gekennzeichnet,**
**dass** vor der Trennbehandlung (4) ein kryogenes Kältemittel in die Suspension eingetragen wird, wodurch eine schockartige Abkühlung an der Eintragsstelle des kryogenen Kältemittels erfolgt.

2. Verfahren nach Anspruch 1, **dadurch gekennzeichnet dass** als kryogenes Kältemittel Kohlendioxid zum Einsatz kommt, das im festen, flüssigen oder kalten gasförmigen Zustand in die Suspension eingetragen wird.

3. Verfahren nach Anspruch 1 oder 2, **dadurch gekennzeichnet, dass** der Suspension vor der Zugabe eines Kältemittels ein Mittel zum Agglomerieren von Mikrostickies zugegeben wird.

4. Verfahren nach Anspruch 3, **dadurch gekennzeichnet, dass** zum Agglomerieren von Mikrostickies eine Quelle für Ca²⁺ - Ionen zugegeben wird.

5. Verfahren nach Anspruch 3 oder 4, **dadurch gekennzeichnet, dass** die Zugabe der Quelle für Ca²⁺ - Ionen nach der ersten Trennbehandlung zur Entfernung von grobkörnigen Kleberesten erfolgt und die mit den Ca²⁺ -Ionen und dem kryogenen Kältemittel behandelte Suspension anschließend wieder der Trennbehandlung (4) zur Entfernung grobkörniger Kleberreste zugeführt wird.

## Claims

1. Process for removing stickies in the recycling of wastepaper wherein the wastepaper is digested to form an aqueous suspension and the suspension is subjected to a mechanical or chemical separating treatment (4) to separate macrostickies from the suspension,
**characterized.in that**
before the separating treatment (4) a cryogenic coolant is introduced into the suspension to effect shock cooling at the point of entry of the cryogenic coolant.

2. Process according to Claim 1, **characterized in that** the cryogenic coolant used is carbon dioxide, which is introduced into the suspension while in the solid, liquid or cold gaseous state.

3. Process according to Claim 1 or 2, **characterized in that** an agent for agglomerating microstickies is added to the suspension before the addition of a coolant.

4. Process according to Claim 3, **characterized in that** a source of Ca²⁺ ions is added to agglomerate microstickies.

5. Process according to Claim 3 or 4, **characterized in that** the source of Ca²⁺ ions is added after the first separating treatment for removing macrostickies and the suspension treated with the Ca²⁺ ions and the cryogenic coolant is subsequently returned to the separating treatment (4) for removing macrostickies.

## Revendications

1. Procédé pour éliminer les restes de colle lors de la réutilisation de vieux papier, dans lequel le vieux papier est digéré en une suspension aqueuse et la suspension est soumise à un traitement de séparation (4) mécanique ou chimique pour la séparation de restes grossiers de colle de la suspension, **caractérisé en ce qu'**on introduit dans la suspension, avant le traitement de séparation (4), un agent de refroidissement cryogène, suite à quoi un refroidissement par choc se produit au site d'introduction de l'agent de refroidissement cryogène.

2. Procédé selon la revendication 1, **caractérisé en ce qu'**on utilise, comme agent de refroidissement cryogène, du dioxyde de carbone, qui est introduit sous forme solide, liquide ou gazeuse froide dans la suspension.

3. Procédé selon la revendication 1 ou 2, **caractérisé en ce que** la suspension est additionnée, avant l'addition d'un agent de refroidissement, d'un agent pour agglomérer les micromatières collantes.

4. Procédé selon la revendication 3, **caractérisé en ce qu'**on ajoute, pour l'agglomération des micromatières collantes, une source d'ions Ca²⁺.

5. Procédé selon la revendication 3 ou 4, **caractérisé en ce que** l'addition de la source d'ions Ca²⁺ n'a lieu qu'après le premier traitement de séparation pour éliminer les restes de colle et la suspension traitée aux ions Ca²⁺ et par l'agent de refroidissement cryogène est ensuite à nouveau introduite dans le traitement de séparation (4) pour l'élimination de restes grossiers de colle.
